# EUROPÄISCHE PATENTSCHRIFT

(11) **EP 3 624 976 B1**
(45) Veröffentlichungstag und Bekanntmachung des Hinweises auf die Patenterteilung: **04.08.2021**
(21) Anmeldenummer: 18725822.3
(22) Anmeldetag: 17.05.2018
(51) Int. Cl.: B23D 47/12, B27B 5/14, B27B 5/30, B23Q 5/04

(54) **TRENNEINRICHTUNG UND BEARBEITUNGSMASCHINE MIT TRENNEINRICHTUNG**
CUTTING DEVICE AND MACHINING MACHINE WITH A CUTTING DEVICE
DISPOSITIF DE COUPE ET MACHINE D'USINAGE AVEC DISPOSITIF DE DE COUPE

(30) Priorität: 19.05.2017 DE 102017208536
(43) Veröffentlichungstag der Anmeldung: 25.03.2020
(73) Patentinhaber: HOMAG GmbH, 72296 Schopfloch (DE)
(72) Erfinder: CALMBACH, Martin, 72160 Horb-Die en (DE); GRINGEL, Martin, 72479 Stra berg (DE)
(74) Vertreter: Hoffmann Eitle
(86) Internationale Anmeldenummer: PCT/EP2018/062893
(87) Internationale Veröffentlichungsnummer: WO 2018/211008

(56) Entgegenhaltungen:
- EP-A2- 2 868 431
- WO-A1-2013/167763
- WO-A1-2014/146794
- WO-A1-2016/046740
- DE-U1- 29 721 091
- US-A- 5 193 595

## Beschreibung

Die vorliegende Erfindung betrifft eine Trenneinrichtung gemäß dem Oberbegriff des Anspruchs 1 und eine Verwendung einer Trenneinrichtung gemäß dem Oberbegriff des Anspruchs 14. Diese Trenneinrichtung ist geeignet zur Bearbeitung von Werkstücken, bevorzugt Werkstücken aus Holz, Holzwerkstoffen, Kunststoffen, Dämmstoffen oder Verbundwerkstoffen. Bei derartigen Werkstücken handelt es sich bevorzugt um plattenförmige Werkstücke, wie diese im Bereich der Möbel- oder Bauelementeindustrie zum Einsatz kommen.

### Stand der Technik

Eine solche Trenneinrichtung und eine solche Verwendung sind aus WO2016/046740A1 bekannt. Im Stand der Technik sind Bearbeitungsmaschinen bekannt, die mit einer Trenneinrichtung versehen sind, um plattenförmige Werkstücke aufzuteilen. Beispielsweise wird in einem Werkzeugwechsler ein Sägeaggregat vorgehalten, das bei Bedarf in eine Spindeleinheit einer Bearbeitungsmaschine eingewechselt wird. Das Kreissägeaggregat wird nachfolgend mit der Bearbeitungsspindel betätigt, um an einem Werkstück eine Schneidbearbeitung durchzuführen.

Allerdings haben konventionelle Sägeaggregate den Nachteil, dass diese einen relativ hohen Platzbedarf erfordern und die Schnitttiefe relativ begrenzt ist.

Aus der WO 2014/146794 A1 ist ein Gerätekopf für ein Werkzeuggerät bekannt, insbesondere für eine Ringkreissäge oder einen Winkelschleifer.

Ferner beschreibt die US 5,193,595 A1 eine Säge für die Holzbearbeitung.

Als weiteres Dokument ist die WO 2016/046740 A1 bekannt, die eine Maschine zum Bearbeiten von Natursteinplatten, Agglomeraten oder Keramikmaterial zeigt.

### Gegenstand der Erfindung

Es ist ein Ziel der vorliegenden Erfindung, eine Trenneinrichtung bereitzustellen, mit der auch ein größeres Bearbeitungsspektrum abgedeckt werden kann.

Der Gegenstand des Anspruchs 1 stellt eine solche Trenneinrichtung bereit. Weitere bevorzugte Ausführungsformen sind in den abhängigen Ansprüchen aufgeführt, sowie in der nachfolgenden Beschreibung erläutert. Ferner stellt die vorliegende Erfindung eine Bearbeitungsmaschine mit einer solchen Trenneinrichtung bereit, sowie eine Verwendung der Trenneinrichtung.

Die erfindungsgemäße Trenneinrichtung umfasst ein Übertragungselement, das zum außermittigen Antrieb eines drehbaren Trennelements, insbesondere eines Sägeblatts, vorgesehen ist, sowie eine Drehwelle, die eingerichtet ist, eine Drehbewegung zum Antrieb des Übertragungselements aufzunehmen. Dabei ist es vorgesehen, dass ein Abschnitt der Drehwelle in eine Spindeleinheit einer Bearbeitungsmaschine einwechselbar ist. Die Drehwelle ist somit derart ausgestaltet, in eine Spindeleinheit einer Bearbeitungsmaschine eingewechselt zu werden.

Eine derartige Trenneinrichtung ermöglicht eine größere Schnitttiefe bei gleichzeitig kleinerer Störkontur. Auf diese Weise kann das Bearbeitungsspektrum gegenüber konventionellen Trenneinrichtungen weiter gesteigert werden.

Ferner ist es vorgesehen, dass die Drehwelle in einen Hohlschaftkegel einer Spindeleinheit einwechselbar ist.

Erfindungsgemäß ist es vorgesehen, dass die Trenneinrichtung eine Ringsäge ist. Dabei kann es sich bei dem Hohlschaftkegel bevorzugt um eine HSK F63-Spindel oder alternativ eine E63-Spindel, bevorzugt gemäß DIN69893, handeln. Somit ist es möglich, die Trenneinrichtung bei einer Spindeleinheit einzusetzen, die auch andere Werkzeuge aufnehmen kann, bspw. ein Fräs- und/oder Bohrwerkzeug.

Gemäß einer weiteren Ausführungsform ist es vorgesehen, dass das Übertragungselement über ein Getriebe, insbesondere ein Zahnradgetriebe, mit der Drehwelle in Verbindung steht.

Neben der Aufnahmevorrichtung zur Aufnahme eines drehbaren Elements ist es gemäß einer bevorzugten Ausführungsform vorgesehen, dass die Trenneinrichtung einen Sägering als Trennelement umfasst, wobei das Trennelement für die Holzbearbeitung vorgesehen ist.

Gemäß einer bevorzugten Ausführungsform ist die Trenneinrichtung ferner mit einer Absaugeinrichtung ausgestattet, um Bearbeitungsreste, insbesondere Holzspäne, absaugen zu können. Dies erleichtert die Reinigung der Trenneinrichtung, und bevorzugt auch einer Bearbeitungsmaschine, mit der die Trenneinrichtung verwendet wird.

Als weitere Ausführungsform kann die Trenneinrichtung mit einem Späneleitblech versehen sein, um Bearbeitungsreste, insbesondere Holzspäne, abzuleiten. Somit wird eine großflächige Verunreinigung der Umgebung der Trenneinrichtung vermieden.

In einer Ausführungsform der vorliegenden Erfindung ist es vorgesehen, dass die Trenneinrichtung ein mehrteiliges Gehäuse aufweist, wobei der die Aufnahmevorrichtung aufnehmende Gehäuseteil relativ zum weiteren Gehäuseteil schwenkbar ist. Durch ein mehrteiliges Gehäuse wird eine einfache Austauschbarkeit möglicher defekte Elemente erleichtert. Im Fall der Schwenkbarkeit zweier Gehäuseteile relativ zueinander können weitere Bearbeitungsmöglichkeiten umgesetzt werden. Beispielsweise können schräge Schnitte durchgeführt werden (Schwenkbarkeit um B-Achse).

Ferner kann es vorgesehen sein, dass die Trenneinrichtung eine elektronische Schnittstelle aufweist, um Energie und/oder Daten von der Spindeleinheit aufnehmen zu können. Auf diese Weise wird die Flexibilität der Trenneinrichtung weiter gesteigert.

Beispielsweise kann die Trenneinrichtung mit Sensoren versehen sein, die direkt im Bereich der Bearbeitung Informationen aufnehmen, bspw. eine Ist-Drehzahl des Sägeblatts, eine Umgebungstemperatur, einen Positionssensor.

Alternativ oder zusätzlich kann eine pneumatische Schnittstelle vorgesehen sein, um eine Fluidverbindung bereitzustellen.

Gemäß einer Ausführungsform ist es vorgesehen, dass das Trennelement derart an der Trenneinrichtung aufnehmbar ist, dass sich eine Drehachse des Trennelements senkrecht zur Drehachse der Drehwelle oder parallel zur Drehachse der Drehwelle erstreckt. Somit können Schnitte in vertikaler oder horizontaler Richtung durchgeführt werden.

Ferner betrifft die vorliegende Erfindung eine Bearbeitungsmaschine zur Bearbeitung von Werkstücken aus Holz, Holzwerkstoffen, Kunststoffen oder Verbundwerkstoffen, welche Bearbeitungsmaschine eine Spindeleinheit und eine Trenneinrichtung gemäß einer der zuvor beschriebenen Varianten betrifft. Die Drehwelle der Trenneinrichtung ist durch die Spindeleinheit antreibbar.

Durch den Einsatz einer solchen Trenneinrichtung in Kombination mit einer Bearbeitungsmaschine, die mit einer Spindeleinheit ausgestattet ist, können die bereits genannten Vorteile, insbesondere die gesteigerte Schnitttiefe, im industriellen Einsatz ausgenutzt werden. Dem Anwender ergeben sich somit vollkommen neue Bearbeitungsmöglichkeiten, wodurch die Einsatzmöglichkeit der Bearbeitungsmaschine gesteigert wird.

Dabei ist es bevorzugt, dass die Bearbeitungsmaschine einen Werkzeugspeicher umfasst, wobei die Trenneinrichtung in den Werkzeugspeicher der Bearbeitungsmaschine einwechselbar ist. Ferner kann die Trenneinrichtung wieder aus dem Werkzeugspeicher entnommen werden. Somit ist die Trenneinrichtung in die Bearbeitungsmaschine integriert.

Gemäß einer weiteren Ausführungsform ist es vorgesehen, dass die Spindeleinheit in mehreren translatorischen und zumindest einer rotatorischen Achse, bevorzugt mit zumindest zwei rotatorischen Achsen, bewegbar ist. Auf diese Weise wird in Kombination mit der Trenneinrichtung ein erweitertes Bearbeitungsspektrum erschlossen.

In einer weiteren Ausführungsform ist es vorgesehen, dass die Bearbeitungsmaschine ein Trägerelement, insbesondere ein Portal, einen Ausleger und einen Roboterarm, aufweist. Ferner ist eine Werkstückaufnahme vorgesehen, insbesondere ein Werkstücktisch oder eine oder mehrere Konsolen.

Die vorliegende Erfindung betrifft ferner die Verwendung einer Trenneinrichtung in einer Bearbeitungsmaschine zur Bearbeitung von Holz, Holzwerkstoff, Kunststoff, Schaummaterial, einer Dämmmatte, einem Verbundwerkstoff, oder einer Kombination hiervon, wobei die Trenneinrichtung ein Übertragungselement zum außermittigen Antrieb des Trennelements, insbesondere eines Sägerings, und eine Drehwelle aufweist, die eingerichtet ist, eine Drehbewegung zum Antrieb des Übertragungselements aufzunehmen, wobei vorgesehen ist, dass die Drehwelle zumindest abschnittsweise in einer Spindeleinheit einer Bearbeitungsmaschine einwechselbar ist.

Ferner ist es vorgesehen, dass die Drehwelle in einen Hohlschaftkegel einer Spindeleinheit einwechselbar ist.

Erfindungsgemäß ist es vorgesehen, dass die Trenneinrichtung eine Ringsäge ist.

Bei Verwendung einer solchen Trenneinrichtung mit einer Bearbeitungsmaschine ist es möglich, das Bearbeitungsspektrum bei Schneidbearbeitungen zu erweitern. Insbesondere kann eine höhere Schnitttiefe bei relativ kleiner Störkontur erreicht werden.

Insbesondere bei einer Trennbearbeitung von vergleichsweise weichen oder nachgiebigen Materialien, wie Schaumstoffmaterial, einer Dämmmatte (beispielsweise zumindest abschnittsweise aus Holzfasern), einer Dämmplatte (beispielsweise zumindest abschnittsweise aus Polysterol) oder ähnlichem treten die Vorteile der Trenneinrichtung besonders hervor.

Bereits genannte Varianten der Trenneinrichtung können bei der Verwendung der Trenneinrichtung zum Einsatz kommen. Ferner ist es bevorzugt, dass die Trenneinrichtung in Kombination mit einer Ausführungsform der zuvor genannten Bearbeitungsmaschine verwendet wird.

### Kurze Beschreibung der Zeichnungen

- Fig. 1: ist eine schematische Draufsicht auf eine Bearbeitungsmaschine mit einer Spindeleinheit.
- Fig. 2: zeigt eine erste Ausführungsform einer erfindungsgemäßen Trenneinrichtung mit der Spindeleinheit.
- Fig. 3: zeigt eine zweite Ausführungsform der erfindungsgemäßen Trenneinrichtung mit der Spindeleinheit.
- Fig. 4: zeigt eine dritte Ausführungsform der erfindungsgemäßen Trenneinrichtung mit der Spindeleinheit.

### Detaillierte Beschreibung der bevorzugten Ausführungsformen

Nachfolgend werden anhand der beigefügten Figuren bevorzugte Ausführungsformen der vorliegenden Erfindung im Detail erläutert. Weitere in diesem Zusammenhang genannte Modifikationen bestimmter Einzelmerkmale können jeweils miteinander kombiniert werden, um weitere Ausführungsformen auszubilden.

Die nachfolgend beschrieben Ausführungsformen dienen der Veranschaulichung der vorliegenden Erfindung anhand mehrerer Beispiele. Die beschriebenen Ausführungsformen sind deshalb nicht als einschränkend zu betrachten, sondern dienen dem besseren Verständnis der vorliegenden Erfindung.

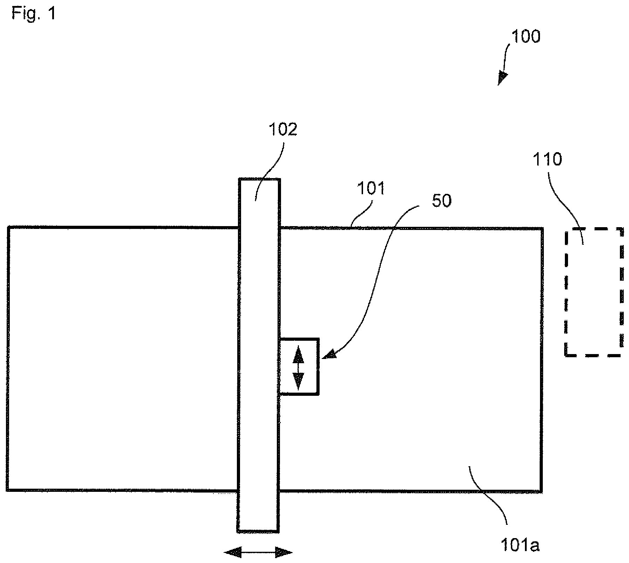

In der schematischen Draufsicht von Fig. 1 wird eine Bearbeitungsmaschine 100 schematisch dargestellt, die im vorliegenden Ausbildungsbeispiel mit einem Portal 102 als einem Beispiel eines Trägerelements versehen ist. Weitere Ausführungsformen betreffen Bearbeitungsmaschinen, die mit einem Ausleger, einem Roboterarm, oder ähnlichem versehen sind.

Die im Rahmen der vorliegenden Ausführungsform beschriebene Bearbeitungsmaschine 100 ist zur Bearbeitung von Werkstücken aus Holz, Holzwerkstoffen, Kunststoff, Schaumstoffmaterial, Fasermaterial oder einem Verbundwerkstoff vorgesehen, so dass die Bearbeitungsmaschine 100 im Bereich der Möbel- und Bauelementeindustrie zum Einsatz kommt.

Am Portal 102 der Bearbeitungsmaschine 100 ist eine Spindeleinheit 50 angebracht, die entlang des Portals 102 verfahren werden kann. Die Bewegung der Spindeleinheit 50 in Relation zum Portal 102 ist in Fig. 1 durch einen Doppelpfeil (an der Spindeleinheit 50) angedeutet.

Das Portal 102 erstreckt sich über ein Maschinenbett 101 und ist entlang diesem verfahrbar (durch einen Doppelpfeil unterhalb der Darstellung des Portals angedeutet), wobei im vorliegenden Ausführungsbeispiel das Maschinenbett 101 mit einem Auflagetisch 101a versehen ist.

Benachbart zum Maschinenbett 101 ist ein Werkzeugspeicher 110 vorgesehen, in dem verschiedene Bearbeitungswerkzeuge aufgenommen werden können. Die Position des Werkzeugspeichers 110 ist im vorliegenden Ausführungsbeispiel lediglich schematisch angedeutet, und kann je nach konkretem Anwendungsfall beliebig variiert werden.

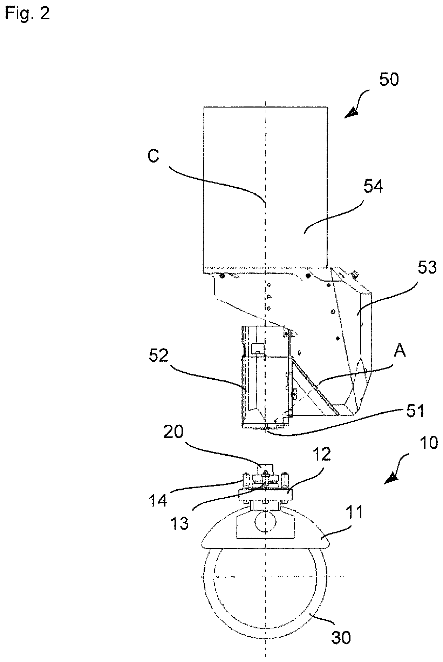

In Fig. 2 wird eine erste Ausführungsform einer erfindungsgemäßen Trenneinrichtung 10 dargestellt, die in eine Schnittstelle 51 der Spindeleinheit 50 eingewechselt werden kann. Die Spindeleinheit 50 in Figur 2 ist als eine sogenannte 5-Achsspindeleinheit ausgebildet.

Die Schnittstelle 51 der Spindeleinheit 50 ist in einem Aufnahmekörper 52 der Spindeleinheit 50 vorgesehen. Der Aufnahmekörper 52 ist relativ zu einem Basisabschnitt 53 der Spindeleinheit 50 um eine Achse A schwenkbar, und der Basisabschnitt 53 ist um eine Achse C zum Anbringungsabschnitt 54 der Spindeleinheit 50 schwenkbar. Der Anbringungsabschnitt 54 der Spindeleinheit 50 ist am Portal 102 oder einem entlang des Portals verfahrbaren Schlittens angebracht.

Die Trenneinrichtung 10 umfasst eine Aufnahmevorrichtung 11, in der ein Sägeblatt 30 abschnittsweise aufgenommen wird. Im vorliegenden Ausführungsbeispiel ist das Sägeblatt 30 insbesondere zur Bearbeitung von Dämmmaterial oder zur Holzbearbeitung geeignet.

Die Lagerung des Sägeblatts 30 in der Aufnahmevorrichtung 11 erfolgt außermittig. Somit kann ein Übertragungselement (nicht dargestellt), das in der Aufnahmevorrichtung 11 aufgenommen ist, am Sägeblatt 30 angreifen, und dieses drehend antreiben.

Die Aufnahmevorrichtung 11 ist mit einem Gehäuse 12 verbunden, durch das sich eine Drehwelle 20 erstreckt und im Gehäuse 12 gelagert ist. Die Drehwelle 20 ist relativ zum Gehäuse 12 drehbar. Ein Endabschnitt der Drehwelle 20, der aus dem Gehäuse 12 hervorsteht, ist derart ausgebildet, dass dieser in eine HSK-Aufnahme der Schnittstelle 51 der Spindeleinheit 50 einwechselbar ist.

Am oberen Abschnitt des Gehäuses 12 sind ein Mitnehmerstift 13 sowie Aufnahmestifte 14 vorgesehen. Die Stifte 13, 14 erstrecken sich parallel zur Drehwelle 20. Die Stifte 13, 14 können in entsprechende Aufnahmen der Spindeleinheit 50 eingeführt werden, so dass eine Schwenkbarkeit der Trenneinrichtung 10 um eine Achse, die der Drehachse der Drehwelle 20 entspricht, sichergestellt wird.

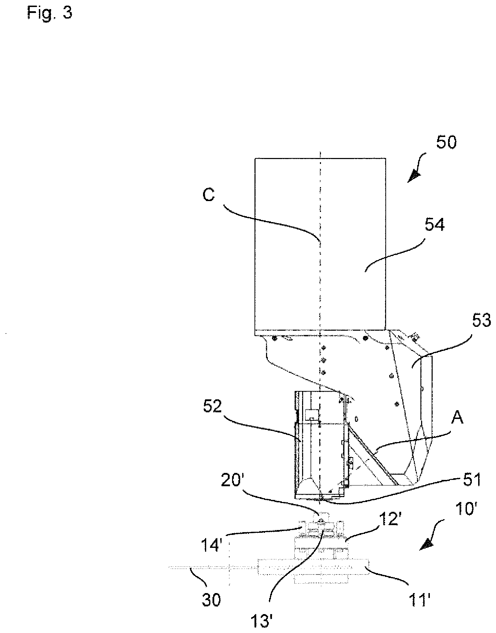

Ist die Trenneinrichtung 10 durch einen 5-Achskopf aufgenommen, wie in Fig. 2 und 3 dargestellt, so wird das die Trenneinrichtung 10 selbst üblicherweise nicht relativ zur Spindeleinheit 50 gedreht. Durch die Aufnahmestifte 14 wird die Trenneinrichtung 10 jedoch positionsgenau an der Spindeleinheit 50 fixiert und kann mit der Spindeleinheit 50 um die C-Achse gedreht werden.

Im Falle eines 4-Achskopfs (in den Zeichnungen nicht dargestellt) erfolgt die Aufnahme beispielsweise direkt in der C-Achse. Dort kann die Trenneinrichtung 10 relativ zur Spindeleinheit 50 gedreht werden.

Die Drehwelle 20 ist derart ausgebildet, dass diese in einen Hohlschaftkegel (HSK F63 oder E63) eingewechselt werden kann. Der Hohlschaftkegel (HSK) ist bevorzugt nach DIN 69893 ausgelegt. Über den Hohlschaftkegel wird eine Drehbewegung auf die Drehwelle 20 übertragen, wobei die Drehwelle 20, wie bereits erläutert, über das Übertragungselement mit einem Sägeblatt in Eingriff steht.

In Fig. 3 wird eine weitere Ausführungsform der vorliegenden Erfindung dargestellt. Dabei ist die Trenneinrichtung derart ausgebildet, dass diese ein Sägeblatt 30 in einer horizontalen Ausrichtung aufnehmen kann. Das Sägeblatt 30 erstreckt sich in einer Ebene, die senkrecht zur Drehachse der Drehwelle 20' der Trenneinrichtung 10' ausgebildet ist. Entsprechend ist die Aufnahmevorrichtung 11' der Trenneinrichtung 10' gemäß der zweiten Ausführungsform, im Vergleich zur ersten Ausführungsform, zur horizontalen Aufnahme des Sägeblatts 30 ausgebildet.

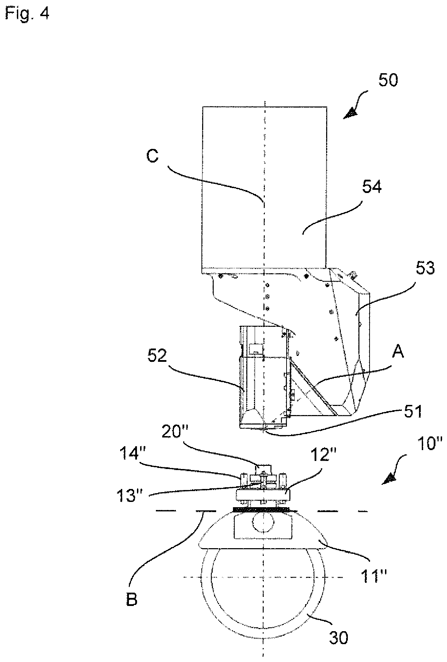

Weitere Elemente der Trenneinrichtung 10' sind gleich oder ähnlich zu denjenigen der Trenneinrichtung 10 ausgebildet. Insbesondere verfügt die Trenneinrichtung 10' über ein Gehäuse 12', von dem sich ein Mitnehmerstift 13' sowie Aufnahmestifte 14' benachbart zur Drehwelle 20' erstrecken. Neben den in den Figuren 2-3 dargestellten Ausführungsformen, bei denen das Sägeblatt 30 in der jeweiligen Trenneinrichtung in horizontaler oder vertikaler Ausrichtung aufgenommen wird, ist ferner einer weitere Ausführungsform denkbar, bei der die Trenneinrichtung in sich schwenkbar ist, um somit die Ausrichtung des Sägeblattes je nach Anwendungsfall variieren zu können. Figur 4 zeigt ein Beispiel einer solchen Trenneinrichtung 10".

In Figur 4 ist eine dritte Ausführungsform dargestellt, die sich gegenüber der in Figur 2 dargestellten Ausführungsform im Wesentlichen dadurch unterscheidet, dass die Trenneinrichtung 10" ein mehrteiliges Gehäuse aufweist, wobei der eine Aufnahmevorrichtung 11" relativ zum weiteren Gehäuseteil 12" schwenkbar ist. Die Schwenkbarkeit wird in Figur 4 durch die zusätzlich bereitgestellte Achse B veranschaulicht.

Weitere Elemente der Trenneinrichtung 10" sind gleich oder ähnlich zu denjenigen der Trenneinrichtung 10 oder 10' ausgebildet. Insbesondere verfügt die Trenneinrichtung 10" über ein Gehäuse 12", von dem sich ein Mitnehmerstift 13" sowie Aufnahmestifte 14" benachbart zur Drehwelle 20" erstrecken.

Mit den zuvor beschriebenen Trenneinrichtungen 10, 10', 10" können auch dickere Werkstücke bearbeitet werden, ohne eine Trenneinrichtung mit einem Sägeblatt mit vergrößertem Durchmesser in die Schnittstelle 51 der Spindeleinheit 50 einwechseln zu müssen. Das Sägeblatt 30 kann während der Bearbeitung derart tief in ein Werkstück eingeführt werden, bis das Werkstück an der Aufnahmevorrichtung 11, 11', 11" anliegt. Somit steht zusätzlich zum Radius des Sägeblatts 30 eine vergrößerte Schnitttiefe zur Verfügung, bei der zum Durchmesser des Sägeblatts 30 der Abstand zur Aufnahmeeinrichtung 11, 11', 11" hinzukommt. Auf diese Weise kann das Bearbeitungsspektrum für eine Trenneinrichtung weiter vergrößert werden, ohne dabei eine Trenneinrichtung mit einem größeren Sägeblatt einsetzen zu müssen.

Darüber hinaus sind Modifikationen der beschriebenen Ausführungsformen denkbar, bei denen die Trenneinrichtung über eine Absaugeinrichtung zum Absaugen von Bearbeitungsresten, insbesondere von Holzspänen, verfügt, und/oder ein Späneleitblech an der Trenneinrichtung, insbesondere am Gehäuse 12, 12', 12" der Trenneinrichtung 10, 10', 10", vorgesehen ist, um Bearbeitungsreste, insbesondere Holzspäne, abzuleiten.

Neben der in den Figuren dargestellten Ausführungsformen einer Spindeleinheit können auch andere Spindeleinheiten zur Aufnahme der Trenneinrichtung vorgesehen sein. Insbesondere kann eine 3-Achs-, 4-Achs-, 5-Achs- oder 6-AchsSpindeleinheit entsprechend ausgebildet sein. Auch kann eine Bearbeitungsmaschine über verschiedene dieser Spindeleinheiten verfügen, wobei die Trenneinrichtung in eine oder mehrere dieser Spindeleinheiten einwechselbar ist.

## Patentansprüche

1. Trenneinrichtung (10, 10', 10"), umfassend:
ein Übertragungselement, das zum außermittigen Antrieb eines drehbaren Trennelements (30), insbesondere eines Sägerings, vorgesehen ist, und
eine Drehwelle (20, 20', 20"), die eingerichtet ist, eine Drehbewegung zum Antrieb des Übertragungselements aufzunehmen,
wobei ein Abschnitt der Drehwelle (20, 20', 20") in eine Schnittstelle (51) einer Spindeleinheit (50) einer Bearbeitungsmaschine (100) einwechselbar ist, und
wobei die Drehwelle (20, 20', 20") in einen Hohlschaftkegel einer Spindeleinheit (50) einwechselbar ist,
**dadurch gekennzeichnet, dass** die Trenneinrichtung eine Ringsäge ist.

2. Trenneinrichtung (10, 10', 10") gemäß Anspruch 1,
**dadurch gekennzeichnet, dass** der Hohlschaftkegel eine HSK F63-Spindel ist.

3. Trenneinrichtung (10, 10', 10") gemäß einem der vorangegangenen Ansprüche, **dadurch gekennzeichnet, dass** das Übertragungselement über ein Getriebe, insbesondere ein Zahnradgetriebe, mit der Drehwelle (20, 20') in Verbindung steht.

4. Trenneinrichtung (10, 10', 10") gemäß einem der vorangegangenen Ansprüche, **dadurch gekennzeichnet, dass** die Trenneinrichtung als Trennelement einen Sägering für die Holzbearbeitung umfasst.

5. Trenneinrichtung (10, 10', 10") gemäß einem der vorangegangenen Ansprüche, **dadurch gekennzeichnet, dass** die Trenneinrichtung eine Absaugeinrichtung zum Absaugen von Bearbeitungsresten, insbesondere von Holzspänen, umfasst.

6. Trenneinrichtung (10, 10', 10") gemäß einem der vorangegangenen Ansprüche, **dadurch gekennzeichnet, dass** die Trenneinrichtung ein Späneleitblech aufweist, um Bearbeitungsreste, insbesondere Holzspäne, abzuleiten.

7. Trenneinrichtung (10") gemäß einem der vorangegangenen Ansprüche, **dadurch gekennzeichnet, dass** die Trenneinrichtung (10") ein mehrteiliges Gehäuse aufweist, wobei der eine Aufnahmevorrichtung (11") für das Trennelement (30) aufnehmende Gehäuseteil relativ zu einem weiteren Gehäuseteil (12") schwenkbar ist.

8. Trenneinrichtung (10, 10', 10") gemäß einem der vorangegangenen Ansprüche, **dadurch gekennzeichnet, dass** die Trenneinrichtung eine elektronische Schnittstelle aufweist, um Energie und/oder Daten von der Spindeleinheit aufnehmen zu können, und/oder eine pneumatische Schnittstelle aufweist.

9. Trenneinrichtung (10, 10', 10") gemäß einem der vorangegangenen Ansprüche, **dadurch gekennzeichnet, dass** das Trennelement (30) derart an der Trenneinrichtung aufnehmbar ist, dass sich eine Drehachse des Trennelements (30) senkrecht zur Drehachse der Drehwelle (20) oder parallel zur Drehachse der Drehwelle (20') erstreckt.

10. Bearbeitungsmaschine (100) zur Bearbeitung von Werkstücken aus Holz oder Holzwerkstoffen, umfassend eine Spindeleinheit (50) sowie eine Trenneinrichtung (10, 10', 10") gemäß einem der vorangegangenen Ansprüche, wobei die Trenneinrichtung (10, 10', 10") über die Spindeleinheit (50) antreibbar ist.

11. Bearbeitungsmaschine (100) gemäß Anspruch 10, **dadurch gekennzeichnet, dass** die Bearbeitungsmaschine einen Werkzeugspeicher (110) umfasst, wobei die Trenneinrichtung (10, 10', 10") in den Werkzeugspeicher der Bearbeitungsmaschine einwechselbar ist.

12. Bearbeitungsmaschine (100) gemäß einem der Ansprüche 10-11, **dadurch gekennzeichnet, dass** die Spindeleinheit (50) in mehreren translatorischen und zumindest einer rotatorischen Achse, bevorzugt zumindest zwei rotatorischen Achsen, bewegbar ist.

13. Bearbeitungsmaschine (100) gemäß einem der Ansprüche 10-12, **dadurch gekennzeichnet, dass** die Bearbeitungsmaschine ein Trägerelement (102), insbesondere ein Portal, einen Ausleger oder einen Roboterarm, und eine Werkstückaufnahme (101, 101a), insbesondere einen Werkstücktisch (101a) oder eine oder mehrere Konsolen, aufweist.

14. Verwendung einer Trenneinrichtung (10, 10', 10") in einer Bearbeitungsmaschine (100) zur Bearbeitung von Holz, Holzwerkstoff, Kunststoff, Schaummaterial, einer Dämmmatte, beispielsweise Faserdämmmatte, Dämmplatte, einem Verbundwerkstoff, oder einer Kombination hiervon, wobei die Trenneinrichtung (10, 10', 10") ein Übertragungselement zum außermittigen Antrieb eines drehbares Trennelements (30), insbesondere eines Sägerings, und eine Drehwelle (20, 20', 20") aufweist, die eingerichtet ist, eine Drehbewegung zum Antrieb des Übertragungselements aufzunehmen, wobei vorgesehen ist, dass die Drehwelle (20, 20', 20") zumindest abschnittsweise in eine Schnittstelle (51) der Spindeleinheit (50) einer Bearbeitungsmaschine (100) einwechselbar ist, und wobei die Drehwelle (20, 20', 20") in einen Hohlschaftkegel einer Spindeleinheit (50) einwechselbar ist, **dadurch gekennzeichnet, dass** die Trenneinrichtung eine Ringsäge ist.

## Claims

1. Cutting device (10, 10', 10'') comprising:
a transmission element which is provided for the eccentric driving of a rotatable cutting element (30), in particular of a saw ring, and a rotary shaft (20, 20', 20'') which is configured to pick up a rotary movement for driving the transmission element, wherein a section of the rotary shaft (20, 20', 20'') can be inserted in an interface (51) of a spindle unit (50) of a processing machine (100), and wherein the rotary shaft (20, 20', 20'') can be inserted in a hollow shaft cone of a spindle unit (50), **characterised in that** the cutting device is a ring saw.

2. Cutting device (10, 10', 10'') according to claim 1, **characterised in that** the hollow shaft cone is an HSK F63 spindle.

3. Cutting device (10, 10', 10'') according to one of the preceding claims, **characterised in that** the transmission element is connected with the rotary shaft (20, 20') via a gear, in particular a gear drive.

4. Cutting device (10, 10', 10'') according to one of the preceding claims, **characterised in that** the cutting device comprises as cutting element a saw ring for machining wood.

5. Cutting device (10, 10', 10'') according to one of the preceding claims, **characterised in that** the cutting device includes a suction device for sucking out machining residues, in particular wood chips.

6. Cutting device (10, 10', 10'') according to one of the preceding claims, **characterised in that** the cutting device has a chip guide plate to conduct away machining residues, in particular wood chips.

7. Cutting device (10'') according to one of the preceding claims, **characterised in that** the cutting device (10'') has a multiple-part housing, wherein the housing part accommodating a mounting fixture (11 '') for the cutting element (30) is swivelable relative to a further housing part (12'').

8. Cutting device (10, 10', 10'') according to one of the preceding claims, **characterised in that** the cutting device has an electronic interface enabling it to receive energy and/or data from the spindle unit, and/or a pneumatic interface.

9. Cutting device (10, 10', 10'') according to one of the preceding claims, **characterised in that** the cutting element (30) can be mounted on the cutting device in such a way that an axis of rotation of the cutting element (30) extends perpendicular to the axis of rotation of the rotary shaft (20) or parallel to the axis of rotation of the rotary shaft (20').

10. Processing machine (100) for machining workpieces made of wood or wood materials, comprising a spindle unit (50) and a cutting device (10, 10', 10'') according to one of the preceding claims, wherein the cutting device (10, 10', 10'') is driveable via the spindle unit (50).

11. Processing machine (100) according to claim 10, **characterised in that** the processing machine includes a tool magazine (110), wherein the cutting device (10, 10', 10'') can be exchanged into the tool magazine of the processing machine.

12. Processing machine (100) according to one of the claims 10-11, **characterised in that** the spindle unit (50) is moveable in several translatory and at least one rotational axis, preferably at least two rotational axes.

13. Processing machine (100) according to one of the claims 10-12, **characterised in that** the processing machine has a carrier element (102), in particular a portal, a boom or a robot arm, and a workpiece mounting (101, 101a), in particular a workpiece bench (101a) or one or more consoles.

14. Use of a cutting device (10, 10', 10'') in a processing machine (100) for machining workpieces made of wood or wood materials, plastic, foam material, an insulating mat, for example a fibre insulating mat, insulating panel, a composite material or a combination thereof, wherein the cutting device (10, 10', 10'') comprises a transmission element for the eccentric driving of a rotatable cutting element (30), in particular of a saw ring, and a rotary shaft (20, 20', 20'') which is configured to pick up a rotary movement for driving the transmission element, wherein the rotary shaft (20, 20', 20") can be inserted at least partially in an interface (51) of the spindle unit (50) of a processing machine (100), and wherein the rotary shaft (20, 20', 20'') can be inserted in a hollow shaft cone of a spindle unit (50), **characterised in that** the cutting device is a ring saw.

## Revendications

1. Dispositif de séparation (10, 10', 10"), comprenant :
un élément de transmission qui est prévu pour l'entraînement excentré d'un élément de séparation (30) rotatif, en particulier d'une lame de scie, et
un arbre de rotation (20, 20', 20") qui est conçu afin de recevoir un mouvement de rotation pour l'entraînement de l'élément de transmission,
dans lequel une section de l'arbre de rotation (20, 20', 20") peut être changée dans une interface (51) d'une unité de broche (50) d'une machine d'usinage (100), et
dans lequel l'arbre de rotation (20, 20', 20") peut être changé dans un cône de tige creuse d'une unité de broche (50),
**caractérisé en ce que** le dispositif de séparation est une scie circulaire.

2. Dispositif de séparation (10, 10', 10") selon la revendication 1,
**caractérisé en ce que** le cône de tige creuse est une broche HSK F63.

3. Dispositif de séparation (10, 10', 10") selon l'une quelconque des revendications précédentes, **caractérisé en ce que** l'élément de transmission est en liaison par le biais d'un engrenage, en particulier un engrenage à roue dentée, avec l'arbre de rotation (20, 20').

4. Dispositif de séparation (10, 10', 10") selon l'une quelconque des revendications précédentes, **caractérisé en ce que** le dispositif de séparation comporte comme élément de séparation une lame de scie pour l'usinage de bois.

5. Dispositif de séparation (10, 10', 10") selon l'une quelconque des revendications précédentes, **caractérisé en ce que** le dispositif de séparation comporte un dispositif d'aspiration pour l'aspiration de restes d'usinage, en particulier de copeaux de bois.

6. Dispositif de séparation (10, 10', 10") selon l'une quelconque des revendications précédentes, **caractérisé en ce que** le dispositif de séparation présente une tôle de déflexion de copeaux afin de détourner des restes d'usinage, en particulier des copeaux de bois.

7. Dispositif de séparation (10") selon l'une quelconque des revendications précédentes, **caractérisé en ce que** le dispositif de séparation (10") présente un boîtier à plusieurs parties, dans lequel l'un dispositif de réception (11") pour la partie de boîtier recevant l'élément de séparation (30) est pivotant par rapport à une autre partie de boîtier (12").

8. Dispositif de séparation (10, 10', 10") selon l'une quelconque des revendications précédentes, **caractérisé en ce que** le dispositif de séparation présente une interface électronique afin de pouvoir recevoir de l'énergie et/ou des données de l'unité de broche, et/ou présente une interface pneumatique.

9. Dispositif de séparation (10, 10', 10") selon l'une quelconque des revendications précédentes, **caractérisé en ce que** l'élément de séparation (30) peut être reçu au niveau du dispositif de séparation de telle manière qu'un axe de rotation de l'élément de séparation (30) s'étende perpendiculairement à l'axe de rotation de l'arbre de rotation (20) ou parallèlement à l'axe de rotation de l'arbre de rotation (20').

10. Machine d'usinage (100) pour l'usinage de pièces à usiner en bois ou matériaux dérivés du bois, comprenant une unité de broche (50) ainsi qu'un dispositif de séparation (10, 10', 10") selon l'une quelconque des revendications précédentes, dans laquelle le dispositif de séparation (10, 10', 10") peut être entraîné par le biais de l'unité de broche (50).

11. Machine d'usinage (100) selon la revendication 10, **caractérisée en ce que** la machine d'usinage comporte un magasin d'outil (110), dans laquelle le dispositif de séparation (10, 10', 10") peut être changé dans le magasin d'outil de la machine d'usinage.

12. Machine d'usinage (100) selon l'une quelconque des revendications 10 à 11, **caractérisée en ce que** l'unité de broche (50) est mobile dans plusieurs axes de translation et au moins un axe de rotation, de préférence au moins deux axes de rotation.

13. Machine d'usinage (100) selon l'une quelconque des revendications 10 à 12, **caractérisée en ce que** la machine d'usinage présente un élément porteur (102), en particulier un portique, une flèche ou un bras de robot, et un logement de pièces à usiner (101, 101a), en particulier une table porte-pièce à usiner (101a) ou une ou plusieurs consoles.

14. Utilisation d'un dispositif de séparation (10, 10', 10") dans une machine d'usinage (100) pour l'usinage de bois, matériau dérivé du bois, matière plastique, matériau expansé, d'un tapis isolant, par exemple tapis isolant en fibre, plaque isolante, d'un matériau composite, ou d'une combinaison de ceux-ci, dans laquelle le dispositif de séparation (10, 10', 10") présente un élément de transmission pour l'entraînement excentré d'un élément de séparation (30) rotatif, en particulier d'une lame de scie, et un arbre de rotation (20, 20', 20") qui est conçu afin de recevoir un mouvement de rotation pour l'entraînement de l'élément de transmission, dans laquelle il est prévu que l'arbre de rotation (20, 20', 20") puisse être changé au moins par sections dans une interface (51) de l'unité de broche (50) d'une machine d'usinage (100), et dans laquelle l'arbre de rotation (20, 20', 20") peut être changé dans un cône de tige creuse d'une unité de broche (50), **caractérisée en ce que** le dispositif de séparation est une scie circulaire.
